# EUROPÄISCHE PATENTSCHRIFT

(11) **EP 1 154 230 B1**
(45) Veröffentlichungstag und Bekanntmachung des Hinweises auf die Patenterteilung: **23.02.2005**
(21) Anmeldenummer: 01109672.4
(22) Anmeldetag: 19.04.2001
(51) Int. Cl.: G01B 21/26

(54) **Fahrwerks-Messvorrichtung und Verfahren zum Vermessen eines Fahrwerks**
Device and method for measuring a vehicle chassis
Dispositif et méthode de mesure du châssis d'un véhicule

(30) Priorität: 09.05.2000 DE 10022534
(43) Veröffentlichungstag der Anmeldung: 14.11.2001
(73) Patentinhaber: Snap-on Equipment GmbH, 64319 Pfungstadt (DE)
(72) Erfinder: Granata, Tebaldo, 66030 Treglio (CH) (IT)
(74) Vertreter: Nöth, Heinz, Dipl.-Phys.

(56) Entgegenhaltungen:
- EP-A- 0 816 801
- WO-A-99/03018
- DE-A- 3 210 318

## Beschreibung

Die vorliegende Erfindung betrifft eine Fahrwerks-Meßvorrichtung für Fahrzeuge, insbesondere für Kraftfahrzeuge gemäß dem Oberbegriff des Anspruchs 1 sowie ein Verfahren für die Fahrwerksvermessung von Fahrzeugen gemäß dem Oberbegriff des Anspruchs 10.

Aus Gründen der Fahrsicherheit und um übermäßigen Verschleiß an den Rädern eines Fahrzeuges zu vermeiden, wird die korrekte Ausrichtung jedes Rades überprüft. Dies erfolgt im Wege der Achsvermessung. Die Achsvermessug wird sowohl in dem Herstellwerk eines Fahrzeuges als auch in eigens hierfür ausgerüsteten Werkstätten durchgeführt.

In der Praxis sind zur Achsvermessung eines Fahrwerks unter anderem optische Verfahren bekannt, bei denen durch eine Kamera sowie durch an den Rädern angebrachte Reflektoren die genaue Ausrichtung bzw. Nicht-Ausrichtung des Rades erfaßt wird. Wird eine Fehlausrichtung des oder der Räder festgestellt, so wird das Fahrzeug mittels einer Hebebühne, auf die das Fahrzeug vor dem Meßvorgang aufgefahren worden ist, angehoben. Anschließend wird die Justierung vorgenommen, das Fahrzeug abgesenkt und die vorgenommene Einstellung überprüft. Stellt sich heraus, daß die Justierung nicht korrekt ausgeführt worden ist, muß das Fahrzeug noch einmal für einen weiteren Justiervorgang angehoben werden. Diese Vorgehensweise ist zeit- und damit kostenintensiv.

Darüber hinaus stellt sich bei der Fahrwerksüberprüfung bzw. Fahrwerksjustierung im Herstellwerk des Fahrzeuges das Problem, das die einzelnen Prüf- und Einstellvorgänge entsprechend der großen Stückzahl schnell aufeinanderfolgend durchgeführt werden müssen. Bei den in der Praxis bekannten Fahrwerks-Meßvorrichtung kann aber das Fahrzeug nur von einer Stirnseite der Fahrzeug-Hebebühne auf diese auffahren, weil an der anderen Stirnseite die Achsmeßeinrichtung stationär angeordnet ist. Hierdurch muß das nächste zu überprüfende Fahrzeug so lange warten, bis das gerade vermessene Fahrzeug die Fahrzeug-Hebebühne verlassen hat. Damit beansprucht der Fahrwerksmeßvorgang unverhältnismäßig viel Zeit, was die Herstellkosten erhöht.

Es ist Aufgabe der vorliegenden Erfindung, eine Vorrichtung sowie ein Verfahren der eingangs genannten Art zu schaffen, die eine schnelle Justierung des Fahrwerkes eines Fahrzeuges bei gleichzeitiger Überprüfung des Justiervorganges erlauben.

Die vorstehende Aufgabe wird hinsichtlich der Vorrichtung durch die Merkmale des Anspruchs 1 gelöst. In den sich daran anschließenden Ansprüchen 2 bis 9 finden sich vorteilhafte Ausgestaltungen hierzu.

Durch die Ausbildung der Achsmeß-Hebeeinrichtung mit zwei Hebestufen, welche unabhängig voneinander reversibel ansteuerbar sind, besteht die Möglichkeit, mit der einen Hebestufe, der ersten Hebestufe, die Achsmeßeinheit der Achsmeßeinrichtung in der für den Meßvorgang notwendigen vertikalen Höhe zu justieren. Handelt es sich insbesondere bei der Achsmeßeinheit um eine optische Meßeinrichtung, so erfolgt die vertikale Justierung der Achsmeßeinheit entsprechend der Position der zugehörigen Reflektoren an den Rädern. Ist nach Feststellen eines Fehlers in der Ausrichtung der einzelnen Räder ein Einstellvorgang notwendig, so kann das Fahrzeug mit der Fahrzeug-Hebebühne angehoben werden. Dabei wird gleichzeitig über die zweite Hebestufe der Achsmeß-Hebeeinrichtung die in ihrer vertikalen Höhe gegenüber den Reflektoren an den Rädern des Fahrzeugs eingestellte Achsmeßeinheit ebenfalls angehoben, ohne daß dabei deren vertikale Justierung verändert wird. Hierdurch ist eine zeitaufwendige Neujustierung der Achsmeßeinheit nicht notwendig. Darüber hinaus besteht die Möglichkeit, den Einstellvorgang bei fortlaufendem Meßvorgang gleichzeitig vorzunehmen, so daß die Einstellung unmittelbar kontrolliert und gegebenenfalls noch einmal geändert werden kann.

Grundsätzlich besteht die Möglichkeit, die Fahrzeughebebühne zuerst anzuheben, deren vertikale Position festzustellen und anschließend die zweite Hebestufe der Achsmeß-Hebeeinrichtung gesteuert auf das Niveau der Fahrzeug-Hebebühne vertikal zu verfahren. Hierdurch tritt eine gewisse Zeitverzögerung ein, da zuerst die Fahrzeug-Hebebühne angehoben, deren Position festgestellt und anschließend die zweite Hebestufe der Achsmeß-Hebeeinrichtung angehoben wird. Um zeitsparend den Einstellvorgang vornehmen zu können, ist es vorteilhaft, wenn der Hebeantrieb der Fahrzeug-Hebebühne und der Hebeantrieb der zweiten Hebestufe der Achsmeß-Hebeeinrichtung so ansteuerbar sind, daß sie synchron verfahrbar sind. Hierdurch werden die Fahrzeug-Hebebühne und die zweite Hebestufe der Achsmeß-Hebeeinrichtung zeitgleich angehoben, so daß unmittelbar nach erreichen der gewünschten Höhe der Fahrzeug-Hebebühne der Einstellvorgang vorgenommen werden kann.

Um die erste Hebestufe einerseits und die zweite Hebestufe sowie die Fahrzeug-Hebebühne andererseits flexibel verfahren zu können, ist es weiterhin von Vorteil, wenn der Antrieb der ersten Hebestufe der Achsmeß-Hebeeinrichtung unabhängig von dem Antrieb der zweiten Hebestufe und der Fahrzeug-Hebebühne reversibel ansteuerbar ist.

Für die Fahrzeug-Hebebühne und die Hebestufen der Achsmeß-Hebeeinrichtung können je nach den vorhandenen Gegebenheiten ganz unterschiedliche Antriebe gewählt werden. Eine besonders kostengünstige Möglichkeit für einen Antrieb besteht darin, daß die Fahrzeug-Hebebühne und wenigstens die zweite Hebestufe der Achsemeß-Hebeeinrichtung als Antrieb jeweils mindestens eine Kolben-/Zylindereinheit aufweisen. Die Kolben-/Zylindereinheiten können pneumatisch oder hydraulisch betrieben werden.

Um das vorstehend erwähnte synchrone Anheben zwischen der zweiten Hebestufe der Achsmeß-Hebeeinrichtung und der Fahrzeug-Hebebühne bewerkstelligen zu können, ist es von Vorteil, wenn die Kolben-/Zylindereinheit der Fahrzeug-Hebebühne mit der Kolben-/Zylindereinheit der zweiten Hebestufe der Achsmeß-Hebeeinrichtung zum synchronen Anheben auf das gleiche Höhenniveau in Reihe geschaltet ist.

Auch der Antrieb der ersten Hebestufe der Achsmeß-Hebeeinrichtung kann durch mindestens eine Kolben-/Zylindereinheit gebildet sein.

Für die Konstruktion der Fahrzeug-Hebebühne sowie der ersten und/oder zweiten Hebestufe können ebenfalls den Gegebenheiten angepaßte, unterschiedliche Gestaltungen gewählt werden. Als besonders vorteilhaft hat sich erwiesen, wenn die Fahrzeug-Hebebühne und/oder die erste Hebestufe und/oder die zweite Hebestufe der Achsmeß-Hebeeinrichtung als Scherenbühne ausgebildet sind.

In aller Regel ist die Achsmeßeinrichtung vor dem Bug oder dem Heck des Fahrzeugs stationär angeordnet. Dies hat zur Folge, daß das Fahrzeug nicht in einer Bewegungsrichtung auf die Fahrzeug-Hebebühne auf- und wieder abfahren kann, da die Achsmeßeinrichtung. im Weg ist. Dies ist insbesondere dann nachteizig, wenn die Fahrwerks-Meßvorrichtung bei einem Fahrzeughersteller eingesetzt wird, bei dem die Fahrzeuge schnell aufeinanderfolgend untersucht werden müssen. Um auch hier in möglichst kurzer Zeit möglichst viele Fahrwerke von Fahrzeugen mit der erfindungsgemäßen Vorrichtung messen und gegebenenfalls nachjustieren zu können, ist es von Vorteil, wenn die Fahrzeug-Hebebühne und die Achsmeß-Hebeeinrichtung auf einem gemeinsamen Fundament angeordnet sind, welches mit wenigstens einer Ausnehmung für die Achsmeß-Hebeeinrichtung versehen ist, in die diese in ihrem Außerbetriebszustand so versenkbar ist, daß sie zumindest mit dem oberen Niveau der Fahrbahn der abgesenkten Fahrzeug-Hebebühne fluchtet. Hierdurch besteht die Möglichkeit, daß das auf der Fahrzeug-Hebebühne befindliche Fahrzeug über die Achsmeßeinrichtung von der Fahrzeug-Hebebühne abfahren kann.

Um dabei eine Beschädigung der Achsmeßeinrichtung zu vermeiden, kann weiterhin vorgesehen sein, daß die Oberseite der Achsmeßeinrichtung mit einer Platte versehen ist, die zumindest annähernd die Ausnehmung im Fundament abschließt.

Hinsichtlich des Verfahrens wird die vorstehende Aufgabe durch die Merkmale des Anspruchs 10 gelöst. In den sich daran anschließenden Ansprüchen 11 bis 13 finden sich vorteilhafte Ausgestaltungen dieses Verfahrens. Es ist zu bemerken, daß der darin enthaltene Gesichtspunkt auch unabhängig von der vorstehend erläuterten Erfindung hinsichtlich der Ausgestaltung einer Achsmeß-Hebeeinrichtung mit zwei Hebestufen verwirklicht werden kann.

Mit dem Verfahren lassen sich zumindest die gleichen Vorteile erzielen, wie sie vorstehend im Zusammenhang mit der Vorrichtung erläutert worden sind.

Weitere Vorteilhafte Ausgestaltungen sowie ein Ausführungsbeispiel werden nachstehend anhand der beigefügten Zeichnungen erläutert. Die hierbei im Zusammenhang mit der Beschreibung verwendeten Begriffe "oben", "unten", "links" und "rechts" beziehen sich auf die Zeichnungsfiguren in Betrachtunslage mit normal lesbaren Figurenbezeichnungen und Bezugszeichen. In den Zeichnungsfiguren ist:
- Fig. 1: eine auseinandergezogene Ansicht von vorn auf eine Achsmeßeinrichtung mit zwei Hebestufen gemäß der Erfindung;
- Fig. 2: eine Draufsicht auf die in Fig. 1 gezeigte Achsmeßeinrichtung;
- Fig. 3: eine Schnittansicht der in Fig. 1 gezeigten Achsmeßeinrichtung im Außerbetriebszustand, in der sie in einer Ausnehmung in einem Fundament für die erfindungsgemäße Vorrichtung aufgenommen ist;
- Fig. 4: eine Seitenansicht der erfindungsgemäßen Fahrwerks-Meßvorrichtung; und
- Fig. 5: ein Schaltbild der Hydraulik für die in Fig. 1 gezeigte Fahrwerks-Meßvorrichtung;

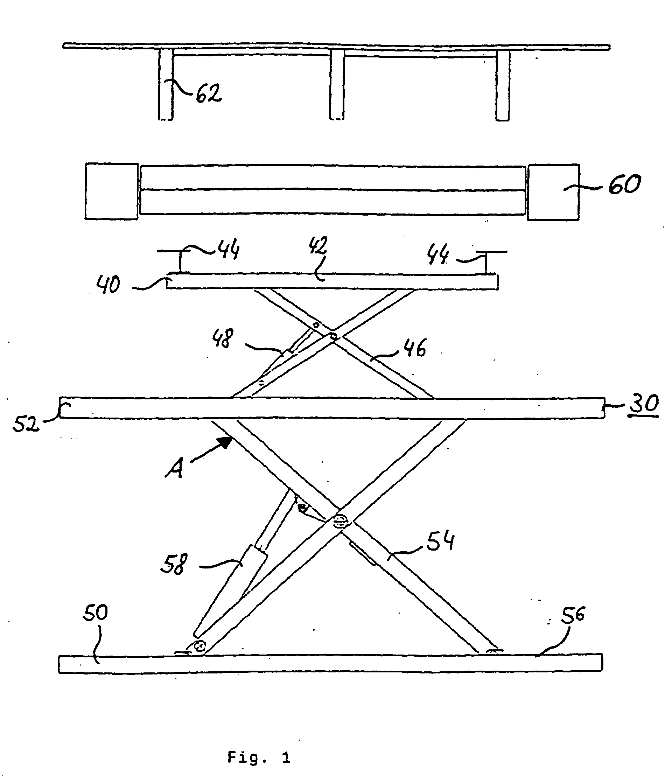

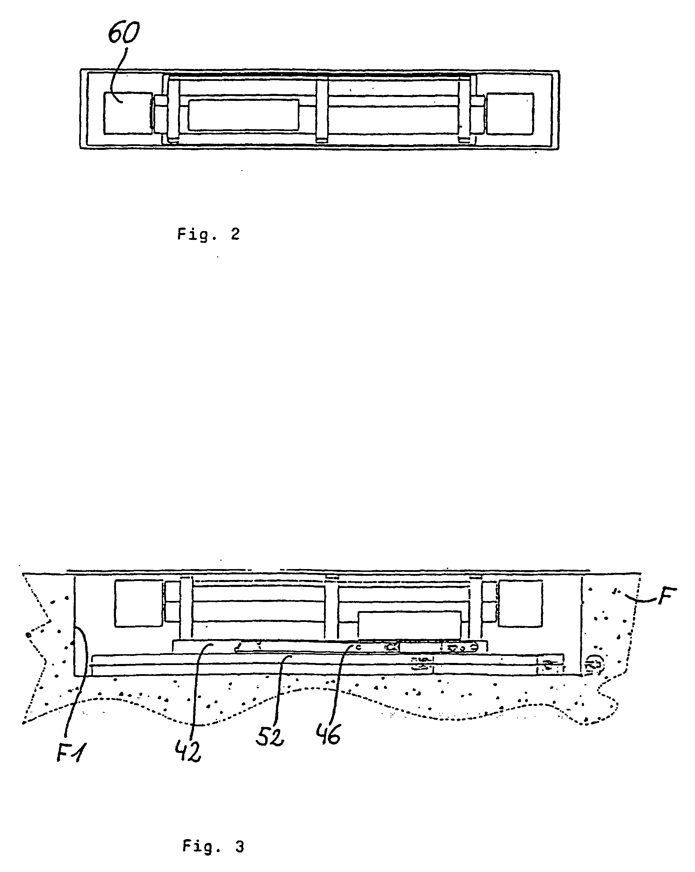

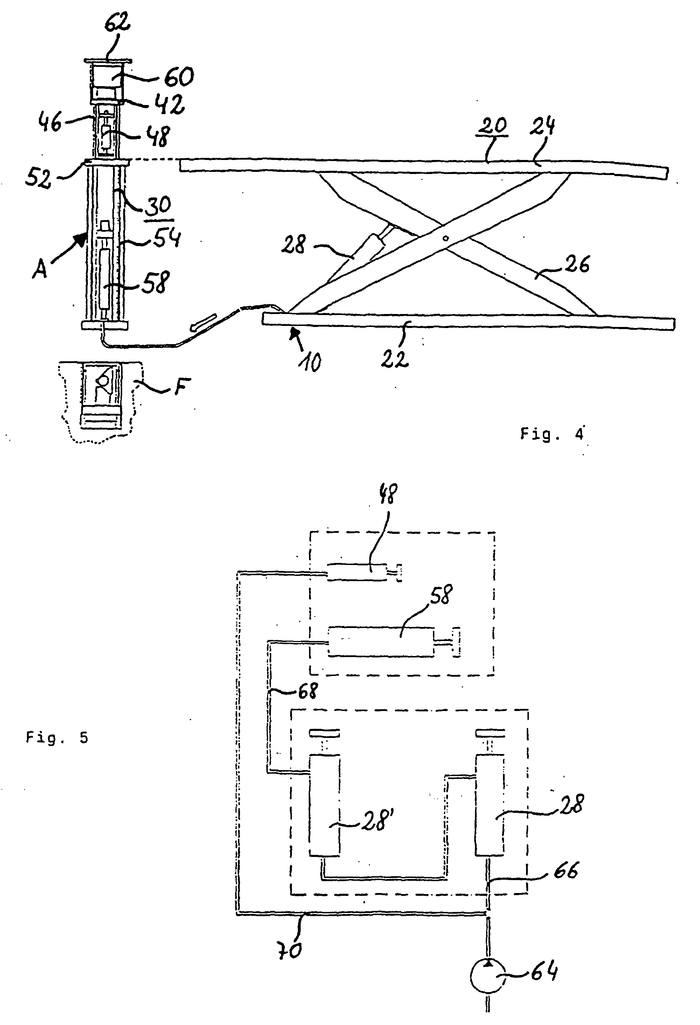

Wie aus den Figuren 1 und 4 hervorgeht, weist die erfindungsgemäße Fahrwerks-Meßvorrichtung 10 als Hauptbaugruppen eine Fahrzeug-Hebebühne 20 zum Anheben und Absenken eines zu untersuchenden, nicht weiter dargestellten Fahrzeugs sowie eine Achsmeß-Hebeeinrichtung 30 auf. Die Fahrzeug-Hebebühne 20 und die Achsmeß-Hebeeinrichtung 30 sind auf einem gemeinsamen Fundament F (vgl. Fig. 3) angeordnet. Das Fundament F kann eine an den beiden Hauptbaugruppen 20, 30 bereits vor deren Aufstellung anmontierte, vorzugsweise aus Stahl hergestellte Platte sein, die bei einem Aufstellen der Fahrwerks-Meßvorrichtung 10 auf dem Aufstellboden aufgesetzt wird. Alternativ kann das Fundament F durch eine in dem Aufstellboden getrennt von den Hauptbaugruppen vor deren Montage angeordnete Platte, insbesondere Betonplatte ausgeführt sein. Die gezeigte Ausführungsform verwirklicht die zweite vorstehend erwähnte Alternative für das Fundament F.

Die in Fig. 4 erkennbare Fahrzeug-Hebebühne 20 ist als Scherenhebebühne ausgebildet. Sie weist eine auf dem Fundament F aufsetzbare und dort mittels geeigneter Elemente befestigbare, sich im wesentlichen horizontal erstreckende Bodenplatte 22 sowie eine ebenfalls horizontal verlaufende Auffahreinrichtung 24 für das zu untersuchende Fahrzeug auf. Die Auffahreinrichtung 24 kann entweder eine durchgehende Platte sein oder als zwei zueinander beabstandete, parallel verlaufende Schienen ausgebildete sein. Der Abstand der beiden Schienen sowie deren Breite sind dabei so gewählt, daß auf sie verschiedene, zu untersuchende Fahrzeuge mit unterschiedlichen Radabständen pro Achse auffahrbar sind. Vorzugsweise sind diese Schienen als nach oben hin offene U-Profile ausgebildet, deren Breite deutlich größer ist als die Breite eines Fahrzeugreifens. Gegebenenfalls können die Schienen in ihrem horizontalen Abstand zueinander einstellbar sein.

Die Bodenplatte 22 und die Auffahreinrichtung 24 sind über ein Scherengestell 26 aus sich mittig kreuzenden Armen miteinander verbunden. Je nach Einsatzbedingung kann ein einzelnes Paar Arme, das mittig zu der Bodenplatte 22 und der Auffahreinrichtung 24 angeordnet ist, oder zwei Armpaare vorgesehen sein, die an den Rändern der Bodenplatte 22 und der Auffahreinrichtung 24 montiert sind. Das Scherengerüst 26 ist mittels wenigstens einer hydraulischen Kolben-/Zylindereinheit 28 in eine in Fig. 4 wiedergegebene, angehobene Position und in eine nicht weiter dargestellte, abgesenkte Position verfahrbar. In der abgesenkten Position liegt die Auffahreinrichtung 24 im wesentlichen auf der Bodenplatte 22 auf oder weist zu dieser nur einen geringfügigen Abstand auf.

An der linken Stirnseite der Fahrzeug-Hebebühne 20 ist die Achsmeß-Hebeeinrichtung 30 vorgesehen. Die Achsmeß-Hebeeinrichtung 30 umfaßt als wesentliche Baugruppen eine erste Hebestufe 40 und eine zweite Hebestufe 50, die zusammen mit der Achsmeßeinheit 60, welche vorzugsweise eine optische Meßeinheit ist, die Achsmeßeinrichtung A bilden. Wie insbesondere aus Fig. 1 entnehmbar ist, ist die erste Hebestufe 40 sowie die zweite Hebestufe 50 ebenfalls als Scheren-Hebestufen ausgebildet.

Die erste Hebestufe 40 besitzt einen ersten, horizontal sowie quer zur Längserstreckung der Fahrzeug-Hebebühne 20 verlaufenden Tragbalken 42, an dessen oberen stirnseitigen Enden Befestigungseinrichtungen 44 zur Anbringung der Achsmeßeinheit 60 vorgesehen sind. Auf den Befestigungseinrichtungen 44 wird die Achsmeßeinheit 60 aufgesetzt und durch geeignete Befestigungsmittel, wie beispielsweise Schrauben befestigt.

Die erste Hebestufe 40 umfaßt weiterhin ein erstes Scherengestell 46 aus sich mittig kreuzenden Armen. Je nach Einsatzbedingungen kann das erste Scherengestell 46 ein oder zwei Armpaare aufweisen. An den oberen Armeenden des Scherengestells 46 ist der Tragbalken 42 angebracht, wogegen die unteren Armenden an einem zweiten Tragbalken 52 der zweiten Hebestufe 50 gelenkig angebracht sind. Die erste Hebestufe 40 wird mittels einer ersten pneumatischen Kolben-/Zylindereinheit 48 in eine in Fig. 1 gezeigte angehobene Position und in eine in Fig. 3 dargestellte, abgesenkte Position verfahren, in der der erste Tragbalken 42 der ersten Hebestufe 40 auf dem zweiten Tragbalken 52 der zweiten Hebestufe 50 planparallel aufsitzt oder zu diesem nur einen geringen Abstand aufweist.

Die zweite Hebestufe 50 enthält den bereits erwähnten zweiten, horizontal sowie quer zur Längserstreckung der Fahrzeug-Hebebühne 20 verlaufenden Tragbalken 52, auf dem die erste Hebestufe 40 angeordnet ist. Die zweite Hebestufe 50 enthält darüber hinaus ein zweites Scherengestell 54, welches wiederum aus einem oder zwei Paaren aus sich mittig kreuzenden Armen gebildet ist. Die oberen Armenden des zweiten Scherengestells 54 sind mit dem zweiten Tragbalken 52 und die unteren Armenden mit einer Grundplatte 56 gelenkig verbunden ist, die auf dem Fundament F anbringbar ist. Die zweite Hebestufe 50 wird mittels einer zweiten pneumatischen Kolben-/Zylindereinheit 58 in eine angehobene Position, die in Fig. 1 wiedergegeben ist, und in eine abgesenkte Position verfahren, die in Fig. 3 gezeigt ist.

In Fig. 3 ist die Achsmeß-Hebeeinrichtung 30 in einer abgesenkten Stellung wiedergegeben, in der sie in einer Ausnehmung F1 des Fundaments F vollständig aufgenommen ist. Hierdurch kann das zu untersuchende Fahrzeug von der Fahrzeug-Hebebühne 20 über die Achsmeß-Hebeeinrichtung 30 abfahren. Um hierbei eine Beschädigung der Achsmeß-Hebeeinrichtung 30 zu vermeiden, ist diese weiterhin mit einer Abdeckplatte 62 versehen, die die Ausnehmung F1 des Fundaments F überdeckt und die die Achsmeß-Hebeeinrichtung 30 vor einer Beschädigung durch das abfahrende bzw. ggf. auch auffahrende Fahrzeug schützt.

In Fig. 5 ist das hydraulische Schaltbild für die erfindungsgemäße Fahrwerks-Meßvorrichtung wiedergegeben. Wie daraus hervorgeht, ist die Kolben-/Zylindereinheit 28 der Fahrzeug-Hebebühne 20, die in diesem Fall aus zwei Kolben-/Zylindereinheiten 28, 28' gebildet ist, über eine Leitung 66 mit einer Quelle 64 für ein Druckfluid verbunden. Der Ausgang der zweiten Kolben-/Zylindereinheit 28' der Fahrzeug-Hebebühne 20 ist über ein weitere Leitung 68 mit dem Eingang der Kolben-/Zylindereinheit 58 der zweiten Hebestufe 50 der Achsmeß-Hebeeinrichtung 30 verbunden. Über eine von der Kolben-/Zylindereinheit 28 bzw. 28' der Fahrzeug-Hebebühne 20 und der Kolben-/Zylindereinheit 58 der zweiten Hebestufe 50 der Achsmeß-Hebeeinrichtung 30 getrennte Leitung 70 ist die Kolben-/Zylindereinheit 48 der ersten Hebestufe 40 der Achsmeß-Hebeeinrichtung 30 mit der Quelle 64 des Druckfluids verbunden. Hierdurch kann die Kolben-/Zylindereinheit 48 der ersten Hebestufe 40 unabhängig von der Betätigung der Kolben-/Zylindereinheiten 28, 28', 58 der Fahrzeug-Hebebühne 50 und der zweiten Hebestufe 50 angesteuert werden.

Ein Meßvorgang mit der erfindungsgemäßen Vorrichtung wird entsprechend dem erfindungsgemäßen Verfahren wie folgt durchgeführt:
Ein zu messendes Fahrzeug, insbesondere ein Personenkraftwagen, wird von der rechten Stirnseite der in Fig. 4 dargestellten Fahrzeug-Hebebühne 20 auf diese aufgefahren, wobei die Fahrzeug-Hebebühne 20 abgesenkt ist. In Übereinstimmung mit der Ausbildung der optischen Achsmeßeinheit 60 werden an die Räder des zu untersuchenden Fahrzeugs Reflektoren angebracht. Anschließend wird die Achsmeßeinheit 60 mittels der ersten Hebestufe 40 aus der Ausnehmung F1 ausgefahren und in der vertikalen Höhe so justiert, daß der Meßvorgang präzise ausgeführt werden kann. Wird an dem Fahrzeuge kein Fehler festgestellt, so wird die erste Hebestufe 40 der Achsmeß-Hebeeinrichtung 30 mit der Achsmeßeinheit 60 wieder zurück in die Ausnehmung F1 des Fundaments F gefahren. Anschließend kann das Fahrzeug von der Fahrzeug-Hebebühne 20 über die Abdeckplatte 62 abgefahren werden.

Wird demgegenüber ein Fehler festgestellt, so wird die Fahrzeug-Hebebühne 20 und dabei gleichzeitig die zweite Hebestufe 50 der Achsmeß-Hebeeinrichtung 30 angehoben. Die Höhe bestimmt sich im wesentlichen dadurch, daß eine Bedienperson unter das Fahrzeug zur Einstellung der Achsen bzw. Räder gelangen kann. Da die Fahrzeug-Hebebühne 20 und die zweite Hebestufe 50 der Achsmeß-Hebeeinrichtung 30 synchron auf die gleiche Höhe angehoben werden, braucht die Achsmeßeinheit 60 mittels der ersten Hebestufe 40 nicht neu justiert werden. Nach Erreichen der gewünschten Höhe seitens der Fahrzeug-Hebebühne 20 und der zweiten Hebestufe 40 nimmt die Bedienperson den Einstellvorgang vor, wobei sie gleichzeitig die Auswirkungen ihrer Justierarbeit über die durch die Achsmeßeinheit 60 gemessenen Werte feststellen kann.

Ist der Einstellvorgang abgeschlossen, so wird die Fahrzeug-Hebebühne 20 zusammen mit der zweiten Hebestufe 50 der Achsmeß-Hebeeinrichtung 30 abgesenkt, wobei die zweite Hebestufe 50 in die Ausnehmung F1 des Fundamentes F zurückfährt. Die erste Hebestufe 50 fährt gleichzeitig oder kurzzeitig danach ebenfalls in die Ausnehmung F1 des Fundaments F ein. Das Fahrzeug kann dann wieder von der Fahrzeug-Hebebühne 20 über die Achsmeß-Hebeeinrichtung 30 abfahren.

### [Bezugszeichenliste]

- 10: Fahrwerks-Meßvorrichtung
- 20: Fahrzeug-Hebebühne
- 22: Bodenplatte
- 24: Auffahreinrichtung
- 26: Scherengestell
- . 28: Kolben-/Zylindereinheit
- 28': Kolben-/Zylindereinheit
- 30: Achsmeß-Hebeeinrichtung
- 40: erste Hebestufe
- 42: erster Tragbalken
- 44: Anbringeinrichtung
- 46: erstes Scherengerüst der Achsmeß-Hebeeinrichtung 30
- 48: Kolben-/Zylindereinheit der ersten Hebestufe 40
- 50: zweite Hebestufe
- 52: horizontaler zweiter Tragbalken
- 54: zweites Scherengerüst der Achsmeß-Hebeeinrichtung 30
- 56: Grundplatte
- 58: Kolben-/Zylindereinheit
- 60: Achsmeßeiheit
- 62: Abdeckplatte
- 64: Quelle für Druckfluid
- 66: Hydraulikleitung
- 68: Hydraulikleitung
- 70: Hydraulikleitung
- A: Achsmeßeinrichtung
- F: Fundament
- F1: Ausnehmung im Fundament F

## Patentansprüche

1. Fahrwerks-Messvorrichtung für Fahrzeuge, insbesondere Kraftfahrzeuge, enthaltend eine Fahrzeug-Hebebühne (20), mit der ein zu vermessendes Fahrzeug reversibel anhebbar ist, und eine Achsmess-Hebeeinrichtung (30), mit der eine Achsmesseinheit (60) reversibel anhebbar ist,
**dadurch gekennzeichnet, dass** die Achsmess-Hebeeinrichtung (30) wenigstens zwei übereinander angeordnete und vertikal bewegbare Hebestufen (40, 50) aufweist, die unabhängig voneinander reversibel ansteuerbar sind, und dass die Achsmesseinheit (60) an der ersten, oben liegenden Hebestufe (40) angeordnet ist.

2. Fahrwerks-Messvorrichtung nach Anspruch 1,
**dadurch gekennzeichnet, dass** ein Hebeantrieb (28) der Fahrzeug-Hebebühne (20) und ein Hebeantrieb (58) der zweiten, unter der ersten Hebestufe (40) liegenden Hebestufe (50) der Achsmess-Hebeeinrichtung (30) so ansteuerbar sind, dass sie synchron verfahrbar sind.

3. Fahrwerks-Messvorrichtung nach Anspruch 1 oder 2,
**dadurch gekennzeichnet, dass** ein Antrieb (48) der ersten Hebestufe (40) der Achsmess-Hebeeinrichtung (30) unabhängig von den Antrieben (28, 58) der zweiten Hebestufe (50) und der Fahrzeug-Hebebühne (20) reversibel ansteuerbar ist.

4. Fahrwerks-Messvorrichtung nach einem der Ansprüche 1 bis
**dadurch gekennzeichnet, dass** die Fahrzeug-Hebebühne (20) und wenigstens die zweite Hebestufe (50) der Achsmess-Hebeeinrichtung (30) als Antrieb jeweils mindestens eine Kolben-/Zylindereinheit (28, 58) aufweisen.

5. Fahrwerks-Messvorrichtung nach Anspruch 4,
**dadurch gekennzeichnet, dass** die Kolben-/Zylindereinheit (28) der Fahrzeug-Hebebühne (20) mit der Kolben-/Zylindereinheit (58) der zweiten Hebestufe (50) der Achsmess-Hebeeinrichtung (30) zum synchronen Anheben auf das gleiche Höhenniveau in Reihe geschaltet ist.

6. Fahrwerks-Messvorrichtung nach einem der Ansprüche 1 bis 5,
**dadurch gekennzeichnet, dass** der Antrieb der ersten Hebestufe (40) der Achsmess-Hebeeinrichtung (30) mindestens eine Kolben-/Zylindereinheit (48) aufweist.

7. Fahrwerks-Messvorrichtung nach einem der Ansprüche 1 bis 6,
**dadurch gekennzeichnet, dass** die Fahrzeug-Hebebühne (20) und/oder die erste Hebestufe (40) und/oder die zweite Hebestufe (50) der Achsmess-Hebeeinrichtung (30) als Scherenbühne ausgebildet sind.

8. Fahrwerks-Messvorrichtung nach einem der Ansprüche 1 bis 7,
**dadurch gekennzeichnet, dass** die Fahrzeug-Hebebühne (20) und die Achsmess-Hebeeinrichtung (30) auf einem gemeinsamen Fundament (F) angeordnet sind, das mit wenigstens einer Ausnehmung (FI) für die Achsmess-Hebeinrichtung (30) versehen ist, in die diese in ihrem Außerbetriebszustand so versenkbar ist, dass sie zumindest mit dem oberen Niveau der Fahrbahn (24) der abgesenkten Fahrzeug-Hebebühne(20) fluchtet.

9. Fahrwerks-Messvorrichtung nach Anspruch 8,
**dadurch gekennzeichnet, dass** die Oberseite der Achsmess-Hebeeinrichtung (30) mit einer Platte (62) versehen ist, die zumindest annährend die Ausnehmung (FI) im Fundament (F) abschließt.

10. Verfahren für die Fahrwerksvermessung von Fahrzeugen mit einer Fahrwerks-Messvorrichtung nach einem der Ansprüche 1 bis 9, die eine Fahrzeug-Hebebühne, mit der ein zu vermessendes Fahrzeug reversibel anhebbar ist, und eine Achsmess-Hebeeinrichtung aufweist, mit der eine Achsmesseinheit reversibel anhebbar ist, wobei nach dem Auffahren des zu vermessenden Fahrzeuges auf die Fahrzeug-Hebebühne und zumindest dem vertikalen Ausrichten der Achsmesseinheit der Messvorgang ausgeführt wird und wobei bei einem Feststellen einer notwendigen Fahrwerks-Justierung das Fahrzeug mittels der Fahrzeug-Hebebühne angehoben wird,
**dadurch gekennzeichnet, dass** die Achsmess-Hebeeinrichtung für die vertikale Justierung der Achsmesseinheit mittels einer ersten, oben liegenden Hebestufe vertikal verfahren wird und dass beim Anheben der Fahrzeug-Hebebühne die Achsmesseinheit mittels einer zweiten, unter der ersten Hebestufe liegenden Hebestufe der Bewegung der Fahrzeug-Hebebühne folgt.

11. Verfahren nach Anspruch 10,
**dadurch gekennzeichnet, dass** die zweite Hebestufe der Achsmess-Hebeeinrichtung synchron mit der Fahrzeug-Hebebühne angehoben wird.

12. Verfahren nach Anspruch 10 oder 11,
**dadurch gekennzeichnet, dass** der Antrieb der ersten sowie zweiten Hebestufe der Achsmess-Hebeeinrichtung und der Antrieb der Fahrzeug-Hebebühne von der gleichen Energiequelle gespeist werden.

13. Verfahren nach einem der Ansprüche 10 bis 12,
**dadurch gekennzeichnet, dass** die Achsmess-Hebeeinrichtung im Außerbetriebszustand in eine Ausnehmung in dem Fundament der Fahrwerks-Messvorrichtung in der Weise versenkbar ist, dass das obere Ende der Achsmess-Hebeeinrichtung mit der Aufstandsfläche des zu vermessenden Fahrzeugs bei abgesenkter Fahrzeug-Hebebühne fluchtet.

## Claims

1. A chassis measuring apparatus for vehicles, in particular motor vehicles, including a vehicle lift platform (20) with which a vehicle to be measured can be reversibly lifted, and an axle measurement lifting device (30) with which an axle measuring unit (60) can be reversibly lifted,
**characterised in that** the axle measurement lifting device (30) has at least two lifting stages (40, 50) which are arranged one above the other and are movable vertically and are actuable reversibly independently of each other and that the axle measuring unit (60) is arranged on the first upwardly disposed lifting stage (40).

2. A chassis measuring apparatus according to claim 1
**characterised in that** a lifting drive (28) of the vehicle lift platform (20) and a lifting drive (58) of the second lifting stage (50) of the axle measurement lifting device (30), which is under the first lifting stage (40), are so actuable that they are displaceable synchronously.

3. A chassis measuring apparatus according to claim 1 or claim 2
**characterised in that** a drive (48) of the first lifting stage (40) of the axle measurement lifting device (30) is reversibly actuable independently of the drives (28, 58) of the second lifting stage (50) and the vehicle lift platform (20).

4. A chassis measuring apparatus according to one of claims 1 to 3
**characterised in that** the vehicle lift platform (20) and at least the second lifting stage (50) of the axle measurement lifting device (30) each have as a drive at least one respective piston-cylinder unit (28, 58).

5. A chassis measuring apparatus according to claim 4
**characterised in that** the piston-cylinder unit (28) of the vehicle lift platform (20) is connected in series with the piston-cylinder unit (58) of the second lifting stage (50) of the axle measurement lifting device (30) for synchronous lifting to the same heightwise level.

6. A chassis measuring apparatus according to one of claims 1 to 5
**characterised in that** the drive of the first lifting stage (40) of the axle measurement lifting device (30) has at least one piston-cylinder unit (48).

7. A chassis measuring apparatus according to one of claims 1 to 6
**characterised in that** the vehicle lift platform (20) and/or the first lifting stage (40) and/or the second lifting stage (50) of the axle measurement lifting device (30) are in the form of a scissors platform.

8. A chassis measuring apparatus according to one of claims 1 to 7
**characterised in that** the vehicle lift platform (20) and the axle measurement lifting device (30) are arranged on a common foundation (F) provided with at least one recess (FI) for the axle measurement lifting device (30), into which the axle measurement lifting device can be lowered in its inoperative condition so that it aligns at least with the upper level of the trackway (24) of the vehicle lift platform (20) in the lowered condition.

9. A chassis measuring apparatus according to claim 8
**characterised in that** the top side of the axle measurement lifting device (30) is provided with a plate (62) which at least approximately closes off the recess (FI) in the foundation (F).

10. A method of chassis measurement of vehicles with a chassis measuring apparatus according to one of claims 1 to 9, which comprises a vehicle lift platform with which a vehicle to be measured can be reversibly lifted and an axle measurement lifting device with which an axle measuring unit can be reversibly lifted, wherein after the vehicle to be measured has been driven on to the vehicle lift platform and after at least vertical alignment of the axle measuring unit the measuring operation is carried out and wherein when a necessary chassis adjustment is detected the vehicle is lifted by means of the vehicle lift platform,
**characterised in that** for vertical adjustment of the axle measuring unit the axle measurement lifting device is displaced vertically by means of a first upwardly disposed lifting stage and that when the vehicle lift platform is raised the axle measuring unit follows the movement of the vehicle lift platform by means of a second lifting stage which is under the first lifting stage.

11. A method according to claim 10
**characterised in that** the second lifting stage of the axle measurement lifting device is raised synchronously with the vehicle lift platform.

12. A method according to claim 10 or claim 11
**characterised in that** the drive of the first and the second lifting stages of the axle measurement lifting device and the drive of the vehicle lift platform are supplied from the same energy source.

13. A method according to one of claims 10 to 12
**characterised in that** the axle measurement lifting device can be lowered in the inoperative condition into a recess in the foundation of the chassis measuring apparatus in such a way that the upper end of the axle measurement lifting device is aligned with the support surface of the vehicle to be measured when the vehicle lift platform is lowered.

## Revendications

1. Dispositif de mesure de châssis de véhicules, notamment de véhicules automobiles, comportant un pont (20) élévateur permettant de soulever de façon réversible un véhicule à mesurer, et un équipement (30) de levage de triangulation permettant de soulever de façon réversible une unité (60) de triangulation, **caractérisé en ce que** l'équipement (30) de levage de triangulation comporte au moins deux niveaux (40, 50) de levage, disposés l'un au-dessus de l'autre et mobiles verticalement, qui peuvent être asservis de façon réversible indépendamment l'un de l'autre, et **en ce que** l'unité (60) de triangulation est disposée sur le premier niveau (40) de levage, situé au-dessus.

2. Dispositif de mesure de châssis suivant la revendication 1, **caractérisé en ce qu'**un entraînement (28) de levage du pont (20) élévateur et un entraînement (58) de levage du second niveau (50) de levage, situé en dessous du premier niveau (40) de levage, de l'équipement (30) de levage de triangulation peuvent être asservis de manière à pouvoir être déplacés en synchronisme.

3. Dispositif de mesure de châssis suivant la revendication 1 ou 2, **caractérisé en ce qu'**un entraînement (48) du premier niveau (40) de levage de l'équipement (30) de levage de triangulation peut être asservi de façon réversible indépendamment des entraînements (28, 58) du second niveau (50) de levage et du pont (20) élévateur.

4. Dispositif de mesure de châssis suivant l'une des revendications 1 à 3, **caractérisé en ce que** le pont (20) élévateur et au moins le second niveau (50) de levage de l'équipement (30) de levage de triangulation comportent respectivement comme entraînement au moins un ensemble (28, 58) cylindre-piston.

5. Dispositif de mesure de châssis suivant la revendication 4, **caractérisé en ce que** l'ensemble (28) cylindre-piston du pont (20) élévateur est monté en série avec l'ensemble (58) cylindre-piston du second niveau (50) de levage de l'équipement (30) de levage de triangulation en vue d'un soulèvement synchrone à la même hauteur.

6. Dispositif de mesure de châssis suivant l'une des revendications 1 à 5, **caractérisé en ce que** l'entraînement du premier niveau (40) de levage de l'équipement (30) de levage de triangulation comporte au moins un ensemble (48) cylindre-piston.

7. Dispositif de mesure de châssis suivant l'une des revendications 1 à 6, **caractérisé en ce que** le pont (20) élévateur et/ou le premier niveau (40) de levage et/ou le second niveau (50) de levage de l'équipement (30) de levage de triangulation sont réalisés sous forme de plates-formes à parallélogramme articulé.

8. Dispositif de mesure de châssis suivant l'une des revendications 1 à 7, **caractérisé en ce que** le pont (20) élévateur et l'équipement (30) de levage de triangulation sont disposés sur un fondement (F) commun qui est pourvu d'au moins un évidement (FI) pour l'équipement (30) de levage de triangulation dans lequel ce dernier peut être, lorsqu'il n'est pas en service, escamoté de telle sorte qu'il se trouve en alignement au moins avec le dessus de la voie (24) du pont (20) élévateur abaissé.

9. Dispositif de mesure de châssis suivant la revendication 8, **caractérisé en ce que** le dessus de l'équipement (30) de levage de triangulation est pourvu d'une plaque (62) qui ferme au moins approximativement l'évidement (FI) dans le fondement (F).

10. Procédé pour mesurer des châssis de véhicules au moyen d'un dispositif de mesure de châssis suivant l'une des revendications 1 à 9, qui comporte un pont élévateur permettant de soulever de façon réversible un véhicule à mesurer et un équipement de levage de triangulation permettant de soulever de façon réversible une unité de triangulation, l'opération de mesure étant effectuée après avoir fait monter le véhicule à mesurer sur le pont élévateur et après au moins l'alignement vertical de l'unité de triangulation, et le véhicule étant soulevé au moyen du pont élévateur en cas de constatation de la nécessité d'un ajustement du châssis, **caractérisé en ce que**, pour l'ajustement vertical de l'unité de triangulation, l'équipement de levage de triangulation est déplacé verticalement au moyen d'un premier niveau de levage, situé au-dessus, et **en ce que**, lors du soulèvement du pont élévateur, l'unité de triangulation suit le mouvement du pont élévateur au moyen d'un second niveau de levage, situé en dessous du premier niveau de levage.

11. Procédé suivant la revendication 10, **caractérisé en ce que** le second niveau de levage de l'équipement de levage de triangulation est soulevé en synchronisme avec le pont élévateur.

12. Procédé suivant la revendication 10 ou 11, **caractérisé en ce que** l'entraînement du premier ainsi que du second niveau de levage de l'équipement de levage de triangulation et l'entraînement du pont élévateur sont alimentés par la même source d'énergie.

13. Procédé suivant l'une des revendications 10 à 12, **caractérisé en ce que** l'équipement de levage de triangulation peut être, lorsqu'il n'est pas en service, escamoté dans un évidement dans le fondement du dispositif de mesure de châssis de telle sorte que l'extrémité supérieure de l'équipement de levage de triangulation est alignée avec la surface de pose du véhicule à mesurer, le pont élévateur étant abaissé.
